Europäisches Patentamt

**European Patent Office**

Office européen des brevets

(19)

(11) Numéro de publication: **0 134 870**

**A1**

(12) **DEMANDE DE BREVET EUROPEEN**

(21) Numéro de dépôt: **83401849.1**

(22) Date de dépôt: **22.09.83**

(51) Int. Cl.⁴: **G 03 B 35/00**
**G 02 B 27/26**

(43) Date de publication de la demande:
**27.03.85 Bulletin 85/13**

(84) Etats contractants désignés:
**AT BE CH DE FR GB IT LI LU NL SE**

(71) Demandeur: **Cuvillier, Roger**
**2bis, Avenue de la 1 Armée**
**F-21000 Dijon(FR)**

(71) Demandeur: **Drouard, Gabriel**
**6, rue Oswaldo Cruz**
**F-75016 Paris(FR)**

(71) Demandeur: **PHOTO 3D S.A.**
**9, rue de Hanovre**
**F-75002 Paris(FR)**

(72) Inventeur: **Cuvillier, Roger**
**2 bis, avenue de la 1 Armée**
**F-21000 Dijon(FR)**

(72) Inventeur: **Drouard, Gabriel**
**6, rue Oswaldo Cruz**
**F-75016 Paris(FR)**

(74) Mandataire: **Lapoux, Roland et al,**
**Martinet & Lapoux 62, rue des Mathurins**
**F-75008 Paris(FR)**

(54) **Système optique pour la projection de couples stéréoscopiques.**

(57) Le système optique comprend une lentille convergente (L) à une distance ajustable (d) devant les deux objectifs ($O_1$, $O_2$) ayant un axe optique (XX) parallèle aux axes optiques ($X_1X_1$, $X_2X_2$) des objectifs et à égale distance ($\ell/4$) des axes des objectifs. Les images monoscopiques ($I_1$, $I_2$) d'un couple stéréoscopique sont disposées dans le plan focal des objectifs et sont de préférence juxtaposées dans un cadre de diapositive standard. La monture ($T_1$, $T_2$) du système optique est montée dan un projecteur classique de diapositive.

FIG.1

EP 0 134 870 A1

# SYSTEME OPTIQUE POUR LA PROJECTION DE COUPLES STEREOSCOPIQUES

La présente invention concerne un système optique pour la projection des images monoscopiques d'un couple stéréoscopique, comprenant deux objectifs à l'arrière desquels les images monoscopiques sont disposées dans le plan focal des objectifs.

Actuellement, la projection des images monoscopiques d'un couple stéréoscopique est obtenue au moyen d'un système optique tel que défini ci-dessus, dont les deux objectifs sont ceux de deux projecteurs de diapositives classiques. Chaque diapositive renferme l'une des images monoscopiques au format standard de 24 x 36 $mm^2$.

Pour l'observation du couple stéréoscopique, les axes optiques des projecteurs sont concourants sur l'écran de projection afin d'assurer la superposition des deux images. Les objectifs des projecteurs sont écartés d'une distance minimale compatible avec l'encombrement des boîtiers des projecteurs pour éviter une sensible déformation d'image en trapèze due à ce que les axes optiques des objectifs ne sont pas perpendiculaires à l'écran.

La sélection des images droite et gauche est obtenue au moyen de deux filtres de polarisation à axes croisés montés respectivement devant les objectifs des projecteurs. L'observateur porte des lunettes également pourvues de filtres de polarisation à axes croisés, en correspondance avec les projecteurs droit et gauche. Ce mode de projection en relief autorise les couleurs.

Le réglage des positions relatives entre les projecteurs et entre les projecteurs et l'écran est effectué pour obtenir une superposition des images droite et gauche sur l'écran, et plus précisément, une coïncidence des points homologues des deux images monoscopiques relatifs au sujet principal de la scène photographiée. L'observation se fait sans fatigue puisque les yeux de l'observateur convergent et accommodent à la fois sur l'écran, quelle que soit la distance de projection.

Cependant, un tel système de projection a pour inconvénient de séparer les images du couple stéréoscopique enregistré simultanément sur la pellicule dans l'appareil de prise de vues. En outre, la superposition des images sur l'écran exige non seulement l'utilisation de deux projecteurs, mais également un réglage fastidieux des positions des projecteurs.

La présente invention a pour but de fournir un système optique de projection stéréoscopique n'utilisant qu'un seul projecteur et ne nécessitant pas une quelconque séparation des images monoscopiques du couple stéréoscopique.

A cette fin, un système optique tel que défini dans l'entrée en matière, est caractérisé en ce qu'il comprend une lentille convergente à une distance prédéterminée devant les deux objectifs, ayant un axe optique parallèle aux axes optiques des objectifs et à égale distance des axes optiques des objectifs.

Le système optique selon l'invention peut remplacer le système optique à un objectif d'un projecteur classique. Les images monoscopiques sont celles d'un stéréogramme qui demeure intact. Un tel stéréogramme peut être obtenu au moyen d'un appareil de prise de vues connu ayant deux objectifs écartés d'une distance inférieure à 64 mm, typiquement égale à 18mm. Les deux images monoscopiques sont alors juxtaposées centralement dans un cadre standard de diapositive à section carrée de 50 x 50 mm$^2$, pour occuper une surface rectangulaire de 24 x 36 mm$^2$.

Le système optique selon l'invention permet ainsi de projeter des stéréogrammes sans dissocier les images monoscopiques droite et gauche.

Selon une autre caractéristique de l'invention, le système optique comprend des moyens pour ajuster la distance prédéterminée entre la lentille et les deux objectifs. Le réglage de ladite distance prédéterminée permet de coïncider précisément sur l'écran les deux images conjuguées des deux images du stéréogramme.

D'autres caractéristiques et avantages de l'invention apparaîtront plus clairement à la lecture de la description suivante d'une réalisation préférée du système optique selon l'invention en référence aux dessins annexés correspondants, dans lesquels :

- la Fig. 1 est une vue schématique en coupe axiale du système optique ;

- la Fig. 2 est une vue schématique analogue à la Fig. 1, où la distance variable entre la lentille et les objectifs permet de superposer partiellement deux images sur un écran ; et

- la Fig. 3 est une vue schématique analogue à la Fig. 1, où la distance variable entre la lentille et les objectifs est ajustée convenablement pour la coïncidence des deux images sur l'écran.

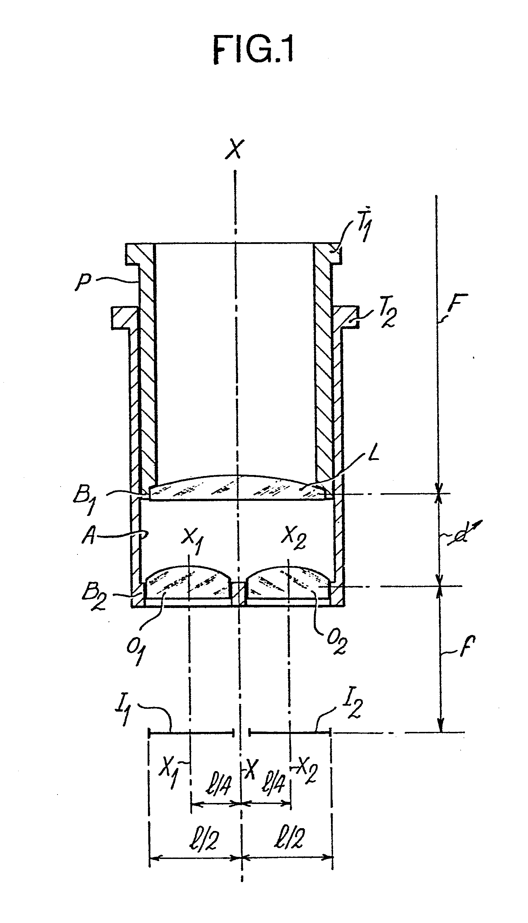

En référence à la Fig. 1, le système optique comprend essentiellement deux objectifs $O_1$ et $O_2$ et une lentille convergente plan-convexe L. Le dioptre plan de la lentille L est en regard des objectifs $O_1$ et $O_2$.

Les axes optiques $X_1X_1$ et $X_2X_2$ des objectifs $O_1$ et $O_2$ sont parallèles et coplanaires à l'axe optique XX de la lentille L. La distance $\ell/2$ entre les axes optiques des objectifs est égale à la distance entre les centres de deux images monoscopiques $I_1$ et $I_2$ formant un couple stéréoscopique. Les images $I_1$ et $I_2$ sont disposées dans le plan focal des objectifs $O_1$ et $O_2$ devant une source lumineuse d'un projecteur et sont juxtaposées de part et d'autre de l'axe optique XX de la lentille L.

La lentille L est devant les objectifs $O_1$ et $O_2$ du côté d'un écran de projection E.

La monture du système optique est composée de deux tubes $T_1$ et $T_2$ concentriques à l'axe de symétrie XX. Dans un orifice central de la base arrière $B_1$ du tube $T_1$ est enchâssée la lentille L. Dans deux orifices de la base arrière $B_2$ du second tube $T_2$ sont enchâssés les objectifs $O_1$ et $O_2$. Les objectifs $O_1$ et $O_2$ sont pratiquement contenus dans un cercle ayant un diamètre égal à celui de la lentille L.

Le tube $T_1$ est translatable dans le tube $T_2$ devant les objectifs $O_1$ et $O_2$ afin d'ajuster la distance d entre la lentille L et les deux objectifs $O_1$ et $O_2$. Le diamètre externe du tube $T_1$ est sensiblement égal au diamètre interne du tube $T_2$. Selon la réalisation illustrée à la Fig. 1, la translation est obtenue par un simple coulissement du tube mobile $T_1$ dans le tube fixe $T_2$, éventuellement guidé par un assemblage à rainure et languette parallèles à l'axe XX, entre la périphérie P du tube $T_1$

et l'alésage A du tube $T_2$. Selon une autre variante, la périphérie P du tube $T_1$ est filetée, et l'alésage A du tube $T_2$ est taraudé ; la translation du tube mobile $T_1$ dans le tube fixe $T_2$ est alors obtenue par vissage ou dévissage du tube $T_1$.

Selon une réalisation préférée, les images monoscopiques $I_1$ et $I_2$ sont juxtaposées dans un cadre standard de diapositive à section carrée de 50 x 50 mm². La hauteur et la longueur $\ell/2$ d'une image $I_1$, $I_2$ sont égales à 24 mm et 18 mm, et les deux images juxtaposées occupent la surface d'une diapositive 24 x 36 mm². Le diamètre externe du tube $T_2$ est égal à 42 mm, ce qui permet le montage du tube $T_2$ sur un projecteur classique de diapositive 24 x 36 mm². La distance focale f des objectifs $O_1$ et $O_2$ est typiquement égale à 50 mm. Par exemple, pour un écran E placé à 500 mm du projecteur, le grandissement d'image est de 10, et les images $I'_1$ et $I'_2$ sur l'écran E ont des dimensions de 240 x 180 mm². La distance focale F de la lentille convergente L est alors choisie égale à la distance de projection de 500 mm.

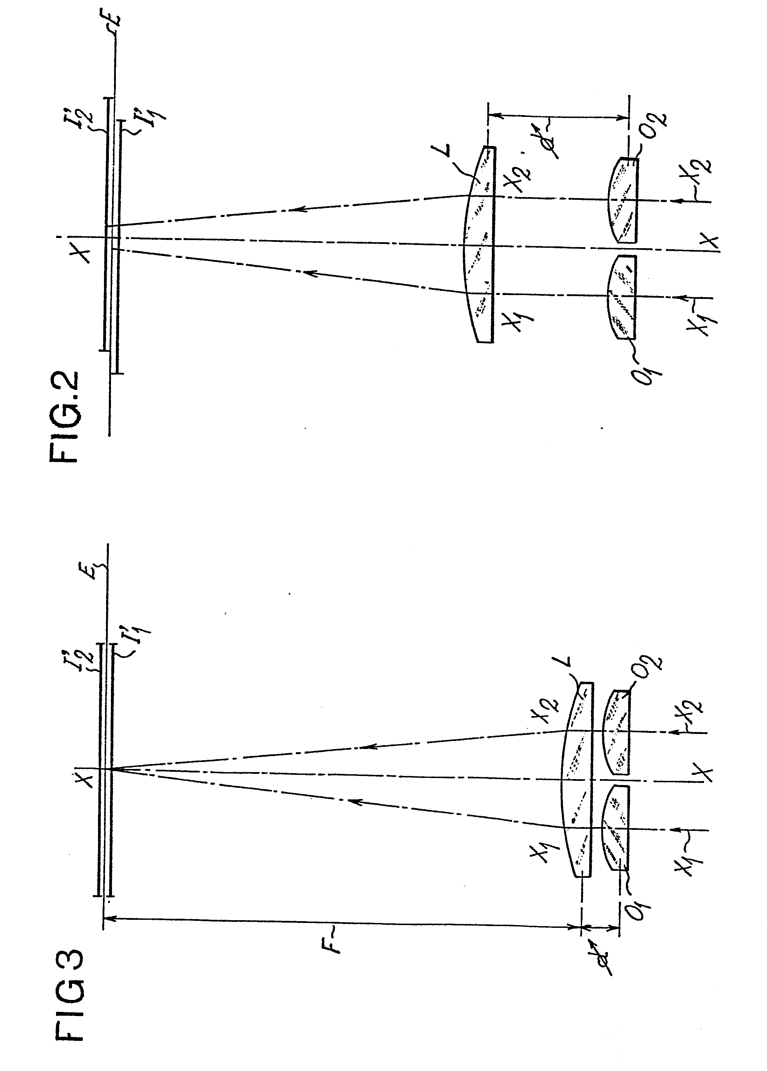

Comme montré à la Fig. 2, la lentille L placée entre les objectifs $O_1$ et $O_2$ et l'écran E a pour effet de dévier les deux faisceaux lumineux incidents qui, initiallement, sont parallèles et traversent respectivement l'image gauche $I_1$ et l'objectif gauche $O_1$, et l'image droite $I_2$ et l'objectif droit $O_2$. Ainsi, sur l'écran E, les images $I'_1$ et $I'_2$ conjugées des images $I_1$ et $I_2$ sont partiellement superposées par la convergence des deux faisceaux vers l'axe optique XX de la lentille L.

Après un positionnement approximatif de l'écran comme montré à la Fig. 2, un réglage plus précis de la distance d est effectué. Le réglage est obtenu par translation de la lentille L dans le tube $T_1$ relativement aux objectifs $O_1$ et $O_2$ dans le tube $T_2$ afin que l'écran E soit dans le plan focal de la lentille L. Dans ce cas, l'image en relief de la scène projetée est nette, du fait de la coïncidence des points homologues des images $I'_1$ et $I'_2$, comme montré à la Fig. 3.

La possibilité d'un réglage précis de l'écartement de points homologues des images $I'_1$ et $I'_2$ afin de les superposer exactement présente un intérêt tout particulier lorsque les images

$I_1$ et $I_2$ sont disposées verticalement l'une au-dessus de l'autre, et non horizontalement l'une à côté de l'autre, comme envisagé jusqu'ici. Pour la projection de deux images $I_1$ et $I_2$ juxtaposées verticalement, les axes optiques des objectifs $O_1$ et $O_2$ sont parallèles dans un plan vertical, et le réglage de la distance d pour la superposition totale des images $I'_1$ et $I'_2$ sur l'écran E agit sur des points homologues alignés verticalement.

Le réglage précis de la distance pour une superposition de points homologues alignés horizontalement peut être omis, car le décalage entre points homologues peut être compensé par un effort de convergence des yeux. Par contre, il est connu que la fusion d'images monoscopiques présentant un décalage vertical est pratiquement impossible. Le dispositif de réglage de la distance d pour deux images monoscopiques $I_1$ et $I_2$ l'une au-dessus de l'autre devient alors indispensable pour obtenir une image nette en relief sur l'écran.

REVENDICATIONS

1 - Système optique pour la projection des images monoscopiques ($I_1$, $I_2$) d'un couple stéréoscopique, comprenant deux objectifs ($O_1$, $O_2$) à l'arrière desquels les images monoscopiques sont disposées dans le plan focal des objectifs, caractérisé en ce qu'il comprend une lentille convergente (L) à une distance prédéterminée (d) devant les deux objectifs ($O_1$, $O_2$), ayant un axe optique (XX) parallèle aux axes optiques ($X_1X_1$, $X_2X_2$) des objectifs ($O_1$, $O_2$) et à égale distance ($\ell/4$) des axes optiques des objectifs.

2 - Système optique conforme à la revendication 1, caractérisé en ce qu'il comprend des moyens pour ajuster la distance prédéterminée (d) entre la lentille (L) et les deux objectifs ($O_1$, $O_2$).

3 - Système optique conforme à la revendication 1 ou 2, caractérisé en ce qu'il comprend un premier tube ($T_1$) dans la base arrière ($B_1$) duquel est fixée la lentille (L) et un second tube ($T_2$) dans la base arrière ($B_2$) duquel sont fixés les deux objectifs ($O_1$, $O_2$), et en ce que le diamètre externe (P) du premier tube ($T_1$) est sensiblement égal au diamètre interne (A) du second tube ($T_2$) qui est concentrique au premier tube ($T_1$).

4 - Système optique conforme aux revendications 2 et 3, caractérisé en ce que les moyens pour ajuster la distance prédéterminée (d) comprennent des moyens pour coulisser axialement le premier tube ($T_1$) dans le second tube ($T_2$).

5 - Système optique conforme aux revendications 2 et 3, caractérisé en ce que les moyens pour ajuster la distance prédéterminée (d) comprennent des moyens de vissage et dévissage du premier tube ($T_1$) dans le second tube ($T_2$).

6 - Système optique conforme à l'une quelconque des revendications 1 à 5, caractérisé en ce que le diamètre de la lentille (L) est sensiblement égale à deux fois le diamètre des objectifs ($O_1$, $O_2$).

7 - Système optique conforme à l'une quelconque des revendications 1 à 6, caractérisé en ce que les images

monoscopiques ($I_1$, $I_2$) sont juxtaposées horizontalement ou verticalement.

8 - Système optique conforme à l'une quelconque des revendications 1 à 7, caractérisé en ce que la distance ($\ell/2$) entre les axes optiques ($X_1X_1$, $X_2X_2$) des objectifs ($O_1$, $O_2$) est égale à 18 mm.

0134870

# FIG.1

FIG 3

$X$

$I'_2$

$E$

$I'_1$

$F$

$X_1$

$X_2$

$L$

$d$

$O_1$

$O_2$

$X_1$

$X$

$X_2$

FIG.2

$X$

$I'_2$

$E$

$I'_1$

$L$

$X_1$

$X_2$

$d$

$O_1$

$O_2$

$X_1$

$X$

$X_2$

0134870

# RAPPORT DE RECHERCHE EUROPEENNE

**Office européen des brevets**

0134870

Numéro de la demande

EP 83 40 1849

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | BE-A- 350 910 (SAVAGE) <br> * En entier * <br><br> --- | 1 | G 03 B 35/00 <br> G 02 B 27/26 |
| A | US-A-4 159 163 (DUDLEY) <br> * En entier * <br><br> ----- | 1 | |

**DOMAINES TECHNIQUES RECHERCHES (Int. Cl. 3)**

G 03 B 35/00
G 03 B 35/22
G 03 B 35/18
G 03 B 35/26
G 03 B 23/16
G 02 B 27/24
G 02 B 27/26
G 02 B 27/22

Le présent rapport de recherche a été établi pour toutes les revendications

| Lieu de la recherche | Date d'achèvement de la recherche | Examinateur |
|---|---|---|
| LA HAYE | 02-05-1984 | MEES G. |

OEB Form 1503. 03.82